# EUROPEAN PATENT APPLICATION

(11) **EP 2 230 583 A1**
(43) Date of publication of application: **22.09.2010**
(21) Application number: 10155839.3
(22) Date of filing: 08.03.2010
(51) Int. Cl.: G06F 3/033

(54) **Interactive multimedia reading system**

(30) Priority: 19.03.2009 IT TV20090049
(71) Applicant: Lifeview SRL, 31033 Castelfranco Veneto (TV) (IT)
(72) Inventor: Yang, Ni-Yuan, 31033, CASTELFRANCO VENETO TV (IT)
(74) Representative: Modiano, Micaela Nadia

(57) **Abstract**

An interactive multimedia reading system, comprising at least one medium (2) which defines a reading surface (4) provided with a series of graphic indexing codes in a microdot pattern (5) that cannot be detected by the eye of a human user and are printed over graphical representations (12, 13, 14, 15, 16, 17, 18) that are visible to the human eye and at least one pointing device (3), which can be gripped by the user and can be pointed at the reading surface (4). The pointing device (3) further comprises optical means (31) for reading the graphic indexing codes and means (32) for the audio playback of at least one audio track (55, 65) saved in at least one digital memory (41) that is associated with the pointing device (3). The system further comprises, for each graphic indexing code, a corresponding plurality of audio tracks (55, 65) and at least one graphic selection code that can be detected by the optical reading means (31) and is printed over graphic selection elements (10, 11) which can be seen by the user for the selection of at least one audio track to be played back among the audio tracks (55, 65) associated with one of the graphic indexing codes.

## Description

The present invention relates to an interactive multimedia reading system, particularly but not exclusively aimed at learning or practicing languages.

For the systematic learning of foreign languages as well as for teaching very young children their mother tongue, various commercial products are known which, in order to encourage the child to learn the language, present themselves as interactive storytellers.

The user thus uses an interactive book and, while listening to the story told by a prerecorded voice, can follow it in the text or in the drawings printed in the book.

In this manner the user is offered the possibility of listening to the correct pronunciation of the words recited by the narrating voice, to show a sufficiently adult user how the words are written, or, in any case, to stimulate the attention and skills of a user even in the case of a child who cannot read yet.

More particularly, a system is already known in which the images and the text or the words related to a story are printed over a microdot pattern that is not visible to the human eye.

The microdot pattern defines a sort of binary code which, by using suitable optical readers, acts as an indexing system for selecting the audio tracks to be played back.

An example of this background art is given in US7328845B1.

According to what is described in such patent, a user can follow a story by reading the text or by looking at the images printed on the pages of the book and, at the same time, can point a pointing device provided with an optical reader at a phrase or at various graphic elements in order to obtain an associated sound in reply.

When the user points to a graphic element, he/she is actually unknowingly pointing at a code that is printed proximate to the graphical element identified by him/her, which can be detected by the optical reader in order to give instructions to an audio device to play back the corresponding audio track.

Although the variety of products offered by today's market is great, current multimedia systems do not allow a sufficiently differentiated and varied interaction, to the detriment of the longevity of the product.

The aim of the present invention is to provide an interactive multimedia reading system with book-like medium, which makes it possible to overcome the limitations of the background art.

Within this aim, an object of the invention is to provide a multimedia entertainment system that allows a more advanced and differentiated interaction, so as to increase user interest and make the product more useful, enjoyable and durable.

Another object of the present invention is to provide a multimedia system that encourages the learning of languages.

Another object of the present invention is to provide a multimedia system that is flexible, easy to use and has low cost.

This aim and these and other objects that will become better apparent hereinafter are achieved by an interactive multimedia reading system comprising at least one medium that defines a reading surface provided with a series of graphic indexing codes in a microdot pattern that cannot be detected by the eye of a human user and are printed over graphical representations that are visible to the human eye and at least one pointing device, which can be gripped by said user and can be pointed at said at least one reading surface, said pointing device comprising optical means for reading said graphic indexing codes and means for the audio playback of at least one audio track saved in at least one digital memory that is associated with said at least one pointing device, **characterized in that** it comprises, for each one of said graphic indexing codes, a corresponding plurality of said audio tracks and at least one graphic selection code that can be detected by said optical reading means and is printed over graphic selection elements which can be seen by said user, for the selection of at least one audio track to be played back among said audio tracks associated with one of said graphic indexing codes.

Further characteristics and advantages of the present invention will become better apparent from the following detailed description of a preferred but not exclusive embodiment of an interactive multimedia reading system with book-like medium, in particular for the systematic learning of languages, according to the invention, illustrated by way of non-limiting example in the accompanying drawings, wherein:
Figure 1 is a view of an embodiment of the multimedia system according to the invention, which comprises a paper medium and a pointing device;
Figure 2 is a further view of the paper medium shown in Figure 1;

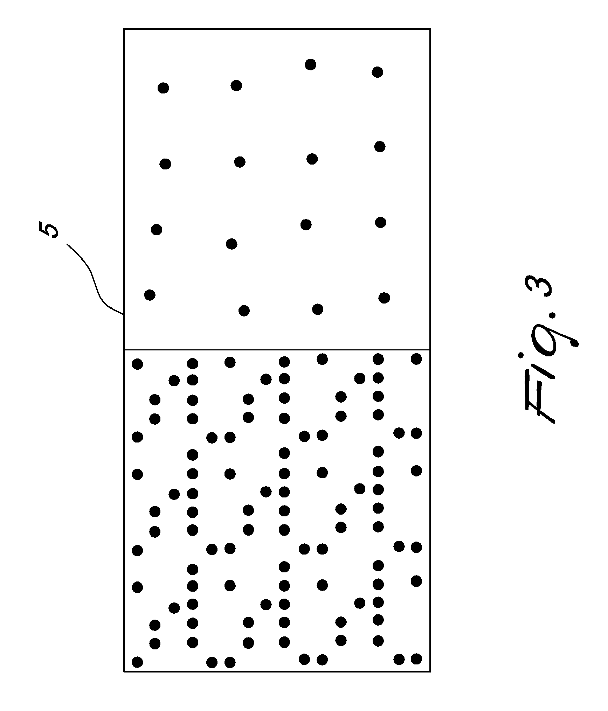

Figure 3 is a view of a microdot pattern related to the paper medium shown in the preceding figures;
Figure 4 is a block diagram which illustrates schematically a content of the pointing device according to the present invention.

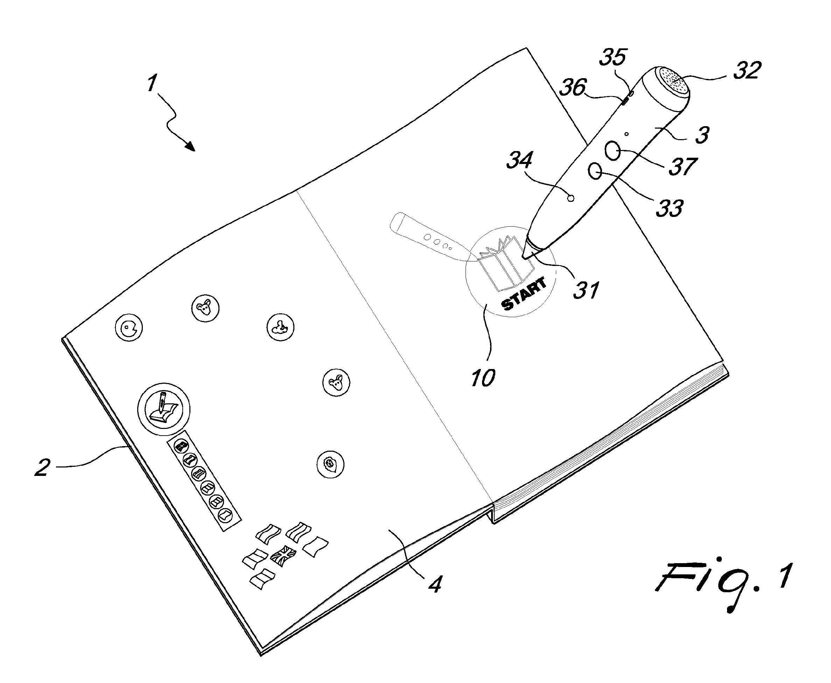

With reference to Figure 1, an interactive multimedia reading system according to the present invention, generally designated by the reference numeral 1, comprises a medium 2 and a pointing device 3.

Preferably, the medium 2 is a medium of the paper type, in particular a book, and has one or more printed reading surfaces 4.

On one or more of the surfaces 4 there is a microdot pattern 5, which is composed of a plurality of microdots arranged so as to define, in a manner not detectable by the human eye, graphic indexing codes.

The expression "not detectable by the human eye" means, in this context, a pattern whose microdotting is such that it cannot be perceived consciously by the reader when the user looks at the paper medium, because it has no meaning for such user and can be mistaken for the background of the medium.

In particular, the microdot pattern 5 is composed of microdots of such dimensions and density that they cannot be perceived by the human eye as something different from the usual dotting effects that are present in printed books.

Within the microdot pattern 5, the arrangement of the microdots is such as to be able to define an alphabet, according to methods that are known in the art and are defined, for example, in US7328845B1, included herein by reference.

The microdot pattern is preferably printed over graphic representations that instead form letters, icons, drawings or graphic symbols that are clearly visible to the user, and are printed on the surfaces or pages 4 of the medium or book 2.

In particular, the microdot pattern 5 is printed so as to define, at a plurality of such graphic representations, for example at a phrase, at a word, at an image or at anything else that can be clearly visible to the user, identification indexes of a corresponding graphic element, such as for example of a position on the surface of the paper medium 2.

The regions of the reading surfaces 4 on which the graphic representations cited above are printed define final selection areas.

Figure 1 shows, in particular, a primary selection area 10, which identifies the book 2.

Graphic selection codes similar to the graphic indexing codes are microprinted in such area.

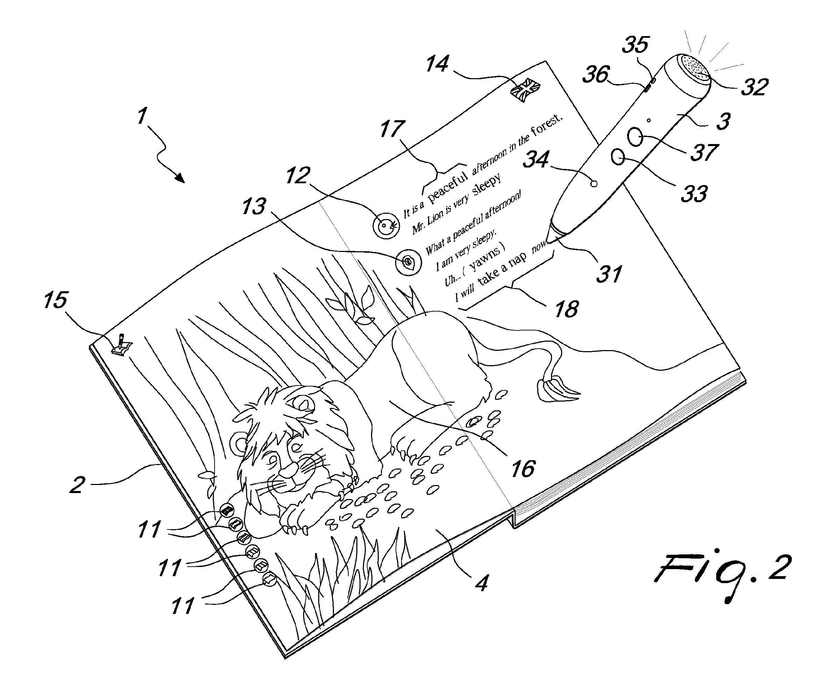

Figure 2 instead shows secondary selection areas 11, which also comprise graphic selection codes illustrated in the form of icons, which identify a selection of context, and final selection areas 12, 13, 14, 15, 16, which indicate or are defined at images, single words 17, entire sentences 18, entire pages or an entire story.

The pointing device 2 consists substantially of a box-like body, preferably having an elongated shape and being substantially pen-shaped, so that it can be gripped easily by the user and can be pointed at the reading surface 4, in particular at the graphic or text symbols printed on the pages of the book 2.

Figure 1 shows that the pointing device 3 comprises an optical reader 31, which is arranged preferably at the tip of the pointing device and acts as a sensor for reading the microdot pattern 5.

Moreover, the pointing device 3 comprises audio playback means 32, for example a small loudspeaker, and can further comprise a plurality of control buttons and luminous indicators, including a power on-off button 37 for switching the device on and off, which can be supplied with power in a conventional manner, by means of rechargeable batteries, non-rechargeable batteries or electrical current.

Moreover, there may be a button 33 for adjusting the volume, so as to adapt the volume to the various requirements of the user, a luminous indicator 34 that indicates the on or off state of the pointing device 3, and an audio socket 35 of a conventional type, for example for pins of the jack type, for connecting external audio peripherals, such as headphones, external loudspeakers and the like. As usual, if an external audio peripheral were connected to the audio output 35, the loudspeaker 32 would be disconnected automatically.

The pointing device 3 can also be provided conveniently with a communication interface 36, for example with a USB port or a slot for inserting a memory card, for loading digital data, as will become better apparent hereinafter.

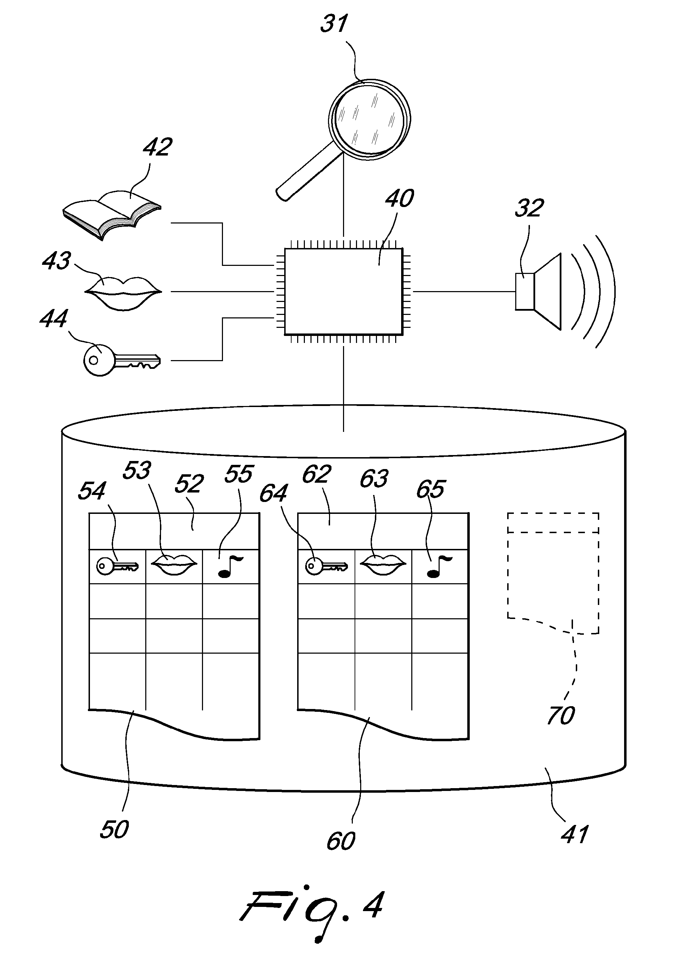

Figure 4 is a schematic view of some components of the pointing device 3 and of a digital content thereof.

In particular, Figure 4 is a view of a microprocessor unit 40 inside the pointing device 3 and associable with memory means 41, with the optical reader 31 and with the loudspeaker 32 and/or the audio port 35.

The memory means 41 preferably comprise a rewritable internal memory or a memory card.

Sets of digital data 50, 60, 70, each set being representative of another book 2, are stored in the memory 41.

Such data sets, which can be organized by means of files and folders in a conventional manner, are identifiable by the processor 40 by means of a primary selection parameter 42, which defines for each book 2 a unique code.

The primary selection parameter 42 is provided in micro-printed form in the book 2 at the primary selection area 10.

Moreover, the processor 40 is adapted to receive in input a second selection parameter 43, which is associated with what is microprinted in the secondary selection areas 11.

Finally, the processor 40 is adapted to receive in input a third selection parameter 44, which is associated with what is microprinted at the final selection areas 12, 13, 17 and 18.

For each one of the graphic selection or indexing codes there is an audio track or a portion thereof. On the basis of the current parameters 52, 53, 54, 62, 63, 64, which give values to the formal parameters 42, 43, 44, the processor can identify a correct audio track 55, 65, which is played by means of the amplifier 32.

The operation of the interactive multimedia system according to the present invention will now be described, for the sake of simplicity and clarity in exposition, with reference to a non-limiting exemplifying embodiment related to the use of the invention as an aid in learning foreign languages.

The person skilled in the art understands without any effort that the multimedia system according to the invention is applicable in a similar manner in any situation where it is useful or necessary to generate a different audio output depending on the purpose of the medium 2 used.

With reference, therefore, to a paper medium having the form of a multilingual multimedia book, a user opens the book 2 that he/she wants to use.

In a preliminary manner, the user points the optical reader 31 of the pointing device 3 at the primary selection area 10, which identifies the book 2.

By doing so, the processor 40 receives an actual value of the formal parameter 42, for example an identifier of the book 52.

In other words, at the beginning of each book 2 there can be a microprinted book activation area, which is printed over a graphic code for identifying the book itself, so as to provide the processor 40 with the information needed to identify the set of audio tracks 55 that correspond to the book 52 currently in use.

The secondary selection areas 11 are, in this case, areas that identify the language in which one wishes to listen to the spoken text.

For example, each one of the selection areas 11 can represent the flag of the country of the corresponding language.

When the user points the optical reader 31 at a secondary selection area 11 which identifies the language, the processor 40 receives an actual value of the second formal parameter 43.

Each time the user points the pointing device 3 at a final selection area 12, 13, 17 and 18, the optical reader 31 detects in the microprinted pattern a code that allows the processor 40 to set the actual value 54 also in relation to the third formal parameter 44.

On the basis of the combination of the three actual parameters 52, 53 and 54, the processor 40 is able to retrieve from the memory means 41 the portion of audio 55 to be played back by means of the loudspeaker 32.

If the text is written in direct form, i.e., if it has the form of line dialogues, it is possible to provide line icons 12, which are also printed on the pages with a microdot pattern that reproduces at least one of the graphic indexing codes that point at a corresponding audio track which reproduces the full line of the dialogue and not just a single word.

Depending on the requirements, further graphic selection codes can be provided, which can also be detected by the optic reader and are printed over selection areas 14 that can be seen by the user, such as, for example, selection icons 14 and 15 that instruct the processor 40 to read an entire page or the entire story.

Moreover, by means of the interface means 36, the user can acquire new paper media 2 and load data related to different books 2 into the memory means 41 of the pointing device 3, without the need to acquire a new pointing device, with a consequent cost containment.

In practice it has been found that the interactive multimedia reading system with book-like medium according to the present invention fully achieves the intended aim and objects.

In particular, the use of selection areas that are present on the medium and are adapted to define a multiple search key for selecting a different audio track allows practical and convenient use for the user, who is able to modify the audio output simply by interacting with other portions of the page of the book.

The multimedia system can be meaningfully used for learning foreign languages. In this case, it is possible to provide on the pages of the book a text that tells a story. Such narrative text can be for example told in direct form, i.e., with the text organized in dialogues, in a first predefined language, such as for example English. A series of images can serve as an addition to the narrative text, in order to help the reader to comprehend the story and make the paper book more enjoyable and attractive.

It is possible to associate with each narrative element of the story, belonging to the text or to the images, an audio track that represents, in digital encoding, sounds, noises, phrases or single words, recited by one or more narrators in one or more languages so as to correspond to the texts, to the single words or to the images, and stored in memory means.

In addition to the audio tracks related to the story, audio tracks related to exercises printed at the end of the book, to summaries of the entire story in the various languages provided by the multimedia system and to welcome and/or goodbye messages that can be played back, respectively, in case of activation and deactivation of the pointing device can be comprised.

The interactive multimedia reading system with book-like support thus conceived is susceptible of numerous modifications and variations, all of which are within the scope of the appended claims. All the details may further be replaced with other technically equivalent elements.

In practice, the materials employed, as long as they are compatible with the specific use, as well as the contingent shapes and dimensions, may be any according to requirements and to the state of the art.

The disclosures in Italian Patent Application No. TV2009A000049 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An interactive multimedia reading system, comprising at least one medium (2) which defines a reading surface (4) provided with a series of graphic indexing codes in a microdot pattern (5) that cannot be detected by the eye of a human user and are printed over graphical representations (12, 13, 14, 15, 16, 17, 18) that are visible to the human eye and at least one pointing device (3), which can be gripped by said user and can be pointed at said at least one reading surface (4), said pointing device (3) comprising optical means (31) for reading said graphic indexing codes and means (32) for the audio playback of at least one audio track (55, 65) saved in at least one digital memory (41) that is associated with said at least one pointing device (3), **characterized in that** it comprises, for each one of said graphic indexing codes, a corresponding plurality of said audio tracks (55, 65) and at least one graphic selection code that can be detected by said optical reading means (31) and is printed over graphic selection elements (10, 11) that can be seen by said user for the selection of at least one audio track to be played back among said audio tracks (55, 65) associated with one of said graphic indexing codes.

2. The system according to claim 1, **characterized in that** it comprises a plurality of said media (2) and **in that** a plurality of said audio tracks (55, 65) for each one of said media (2) are saved in said digital memory (41).

3. The system according to claim 1, **characterized that** each one of said supporting elements (2) comprises a paper book, the pages of which define a plurality of reading surfaces (4).

4. The system according to one or more of the preceding claims, **characterized in that** said graphic representations (12, 13, 14, 15, 16, 17, 18) comprise one or more pictures (16), text phrases (18), individual words (17), written in a first predefined language and associated with said audio tracks (55, 65), said audio tracks (55, 65) comprising one or more sounds, noises, phrases and words recited in one or more languages so as to correspond to said graphic representations (12, 13, 14, 15, 16, 17, 18).

5. The system according to one or more of the preceding claims, **characterized in that** said selection elements (11) comprise a selection icon for each provided language.

6. The system according to one or more of the preceding claims, **characterized in that** said texts are structured into dialogues and each line of dialogue is matched by a line icon (12, 13) that is printed over said graphic indexing codes for the audio playback of said audio tracks (55, 65) that correspond to said line.

7. The system according to one or more of the preceding claims, **characterized in that** said audio playback means (32) comprise at least one loudspeaker that is associated with said at least one pointing device (3) for the audio playback of said audio tracks (55, 65).

8. The system according to one or more of the preceding claims, **characterized in that** it comprises means (36) for interfacing said at least one pointing device (3) for the exchange of data that correspond to said audio tracks (55, 65) with at least one computer and for updating said data.

9. A medium (2) for an interactive multimedia reading system according to one or more of the preceding claims.

10. A pointing device (3) for an interactive multimedia reading system according to one or more of the preceding claims.
